Europäisches Patentamt

European Patent Office

Office européen des brevets

(19)

(11) Publication number: 0 481 621 A2

# EUROPEAN PATENT APPLICATION

(12)

(21) Application number: 91308906.6

(22) Date of filing: 27.09.91

(51) Int. Cl.5: G06K 15/00

(30) Priority: 15.10.90 JP 273508/90

(43) Date of publication of application:
22.04.92 Bulletin 92/17

(84) Designated Contracting States:
DE FR GB

(71) Applicant: International Business Machines
Corporation
Old Orchard Road
Armonk, N.Y. 10504(US)

(72) Inventor: Komooka, Haruo
1432-59 Chogo
Fujisawa-shi, Kanagawa-ken(JP)
Inventor: Matsuyama, Toshifumi
2-18 Kamiseya, Seya-ku
Yokohama-shi, Kanagawa-ken(JP)
Inventor: Mizuno, Masao
1-15-20 Kounan, Kounan-ku
Yokohama-shi, Kanagawa-ken(JP)

(74) Representative: Blakemore, Frederick Norman
IBM United Kingdom Limited Intellectual
Property Department Hursley Park
Winchester Hampshire SO21 2JN(GB)

(54) Information processing apparatus and method.

(57) Information processing apparatus comprises a colour display (3), a colour printer (9), and a memory (11). The memory (11) stores display data defining a separate combination of primary colours for each one of a plurality of pixels of a colour picture on the display (3). Conversion logic (2,6,7,8) converts the display data into printing data for printing the picture on the printer. The conversion logic (2,6,7,8) is configured to detect any portion of the display data that corresponds to an area of the picture in which all the pixels are assigned to the same first colour, and to convert the portion of the display data into printing data for printing only an outline of the area on the printer in colour. A faithful representation of the picture displayed on the colour display (3) is thereby printed on paper by the colour printer (9).

FIG. 1

The present invention relates to information processing apparatus for sending data to a colour image display and a colour printer and more particularly to a method of and apparatus for converting data for displaying a colour image into data for colour printing.

In one well known information processing apparatus, an image displayed on a colour image display as a black area is printed on paper in black by a colour printer, while a white area on the display does not cause any printing on the paper. Since the background area on the display usually appears black, this is also printed in black on the paper. However, if the background area remains the same colour as the blank paper, impression given by the printing is much the same as that given by the display. Moreover, any dotted lines in the background area on the display remain not printed in the corresponding background area printed in black on paper. It is therefore very difficult to recognize the dotted lines.

In another well known information processing apparatus, a black area on the display is not printed and a white area on the display is printed in black. Therefore, an image displayed in white on the display is printed as a black image on the paper, and the impression given by printing differs from that of the image on the display.

In accordance with the present invention there is provided information processing apparatus having a memory for storing display data defining a separate combination of primary colours for each one of a plurality of pixels of a colour picture on a colour display; characterised in that the apparatus further comprises: conversion logic for converting the display data into printing data for printing the picture on a colour printer, the conversion logic being configured to detect any portion of the display data that corresponds to an area of the picture in which all the pixels are assigned to the same first colour, and to convert the portion of the display data into printing data for printing only an outline of the area on the printer in colour.

This advantageously provides all information processing apparatus which enables colour printing to give the impression of a colour image on a colour display.

In a preferred embodiment of the present invention, there is provided means for converting data for displaying a white area or the same colour area as a colour area on a colour display screen into data for printing only the outline of the above area and then outputting the data for printing to a colour printer.

A preferred embodiment of tie present invention will now be described with reference to the accompanying drawings in which:

Figure 1 is a block diagram of information processing apparatus of the present invention.

Figure 2 to Figure 10 are block diagrams of memory areas in the RAM of the apparatus.

Figure 11 is a block diagram of a buffer for printed output in the RAM of the apparatus.

Figure 12 is an example of an image printed by the apparatus.

Figure 13 is the image as displayed on the colour display.

Figure 14 is the image as printed by conventional apparatus.

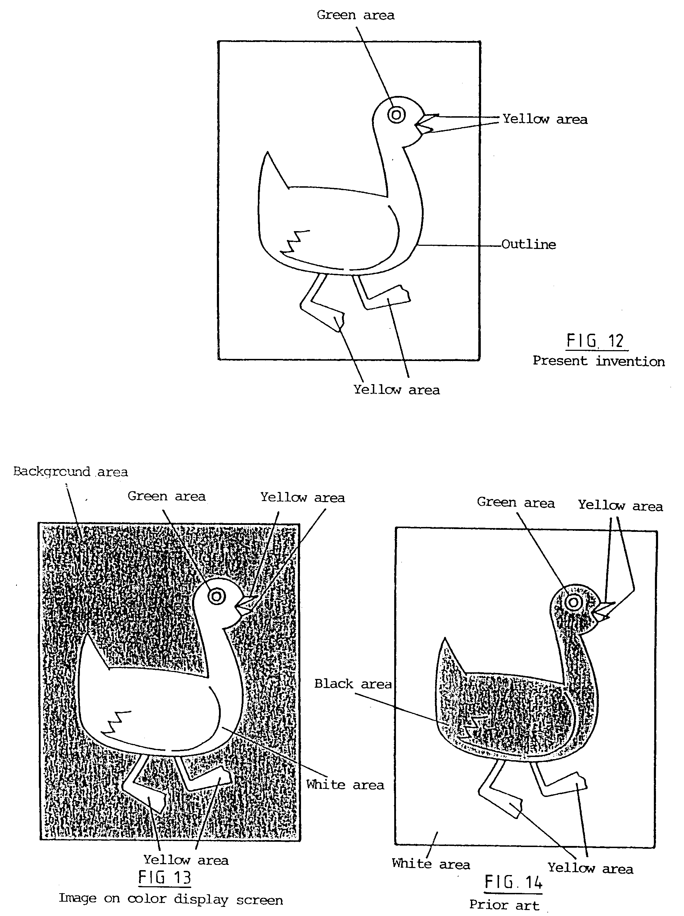

Referring first to Figure 13, as aforementioned, in one known information processing apparatus, a black area on the display is not printed and a white area on the display is printed in black. Therefore, an image displayed in white on the display is printed in black on the paper as shown in Figure 14.

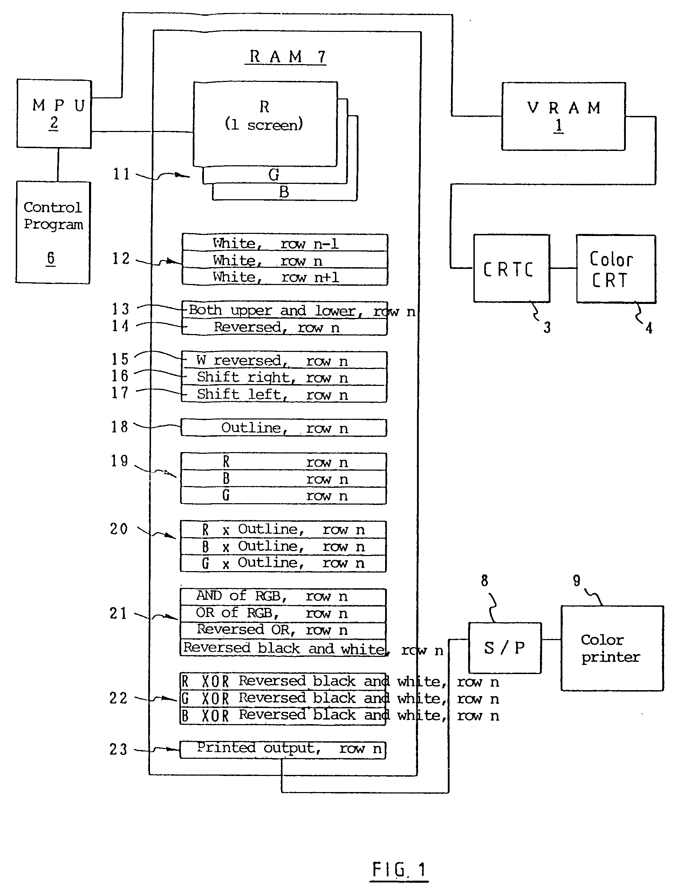

Referring now to Figure 1, information processing apparatus of the present invention comprises a Video Random Access Memory (VRAM) 1. The VRAM 1 stores data corresponding to one screen displayed on a colour display. The contents of the VRAM 1 is rewritten by a Microprocessor (MPU) 2 and read out by a CRT Controller (CRTC) 3 to produce a colour image on the colour display 4. The MPU 2 is configured to operate by a control program 6 and converts data for the colour display in the VRAM 1 into data for colour printing, using various memory areas in a Random Access Memory (RAM) 7. The converted data is outputted, through a serial-to-parallel converter 8, to a colour printer 9.

Colour data, corresponding to the three primary colours, R(Red), G(Green), and B(Blue) for one screen on the colour display is stored in a first memory area 11 of the RAM 7.

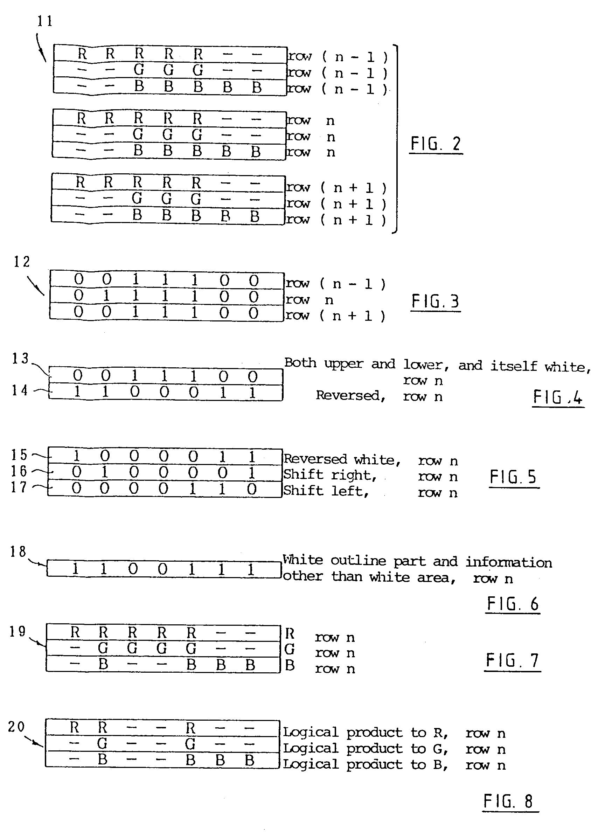

Referring now to Figure 2 to find hit data which produces a white at each pixel (dot or point) in row n-1 on the colour display, a logical AND is applied to bits for R, G, and B for each dot in row n-1. Likewise, the logical AND is applied to bits for R, G, and B for each dot in rows n and n+1.

Referring now to Figure 3, a second memory area 12 is used to store the logical product AND function of hits for R, G, and B for each dot in rows n-1, n, and n+1. If data in the second memory area 12 is 1 (active), then a dot on the colour display screen corresponding to an active bit appears white.

Referring now to Figure 4, further logical operations on the data stored for rows n-1, n, and n+1 identify which dots in row n are themselves white and are also adjacent upper and the lower white dots. The results thus obtained and the reversed data are retained in third and fourth memory areas 13 and 14, respectively.

Referring now to Figure 5, data corresponding to a white dot in row n stored in the second memory area 12 is reversed and the result thus obtained is stored in a fifth memory area 15. The data in the fifth memory area 15 is shifted both right and left by one bit and the result thus obtained is stored in sixth and seventh memory area 16 or a seventh memory areas, 16 and 17, respectively.

Referring now to Figure 6, a logical AND is applied to the bits stored in the fourth, sixth, and seventh memory areas 14, 16, and 17 and the result thus obtained is stored in a eighth memory area 18. An active bit in the eighth memory area 18 indicates that at least one of dots adjacent to a dot corresponding to the active bit does not appear white including the case where the corresponding dot does not appear white. An inactive bit indicates that the corresponding dot appears white on the screen, but that the dot does not appear in the outline of a white area. In other words, it is within the white area.

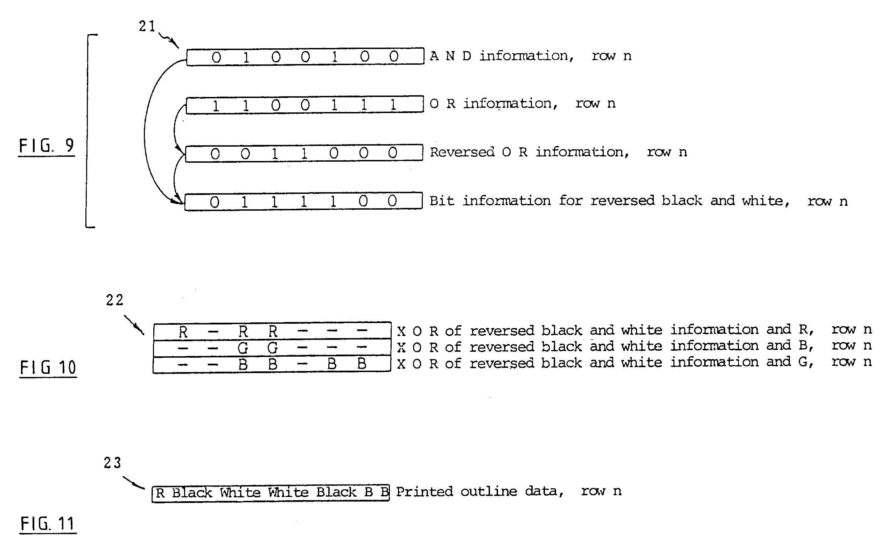

Referring now to Figures 7 and 8, a ninth memory area 19 which retains colour data (R, G, and B) for row n on the screen. A logical AND is applied, to each bit of the RGB colour data and the data stored in the eighth memory area 18 and the result thus obtained is stored in a tenth memory area 20.

Referring now to Figure 9, logical AND and logical OR operations are applied to each bit of RGB data in the tenth memory area 20. The result of the logical OR is reversed and another logical OR operation is applied to the reversed result and the result of said logical AND. The result of the later logical OR is stored in an eleventh memory area 21.

Referring now to Figure 10, an exclusive OR operation is applied to each bit of the data finally in the eleventh memory area 21 and the RGB data stored in the tenth memory area 20 and the result obtained is stored in a twelfth memory area 22. In the data stored in the twelfth memory area 22, a dot with bits for R, G, and B of all 1's causes white colour information (information that does not cause the dot to be printed) to be stored in a buffer 23 for printed output, a dot with bits other than 1 for R, G, and B causes data for printing in black to be stored in the buffer 23. A dot with one of the bits for R, G, and B, set to 1 causes data for printing the same colour as that produced by the specified combination of R, G, and B to he stored in the buffer 23.

In accordance with the above logical operations, data for displaying a dot on the colour display does not cause data for printing the dot if all three primary colour (RGB) defining the dot are active and all three primary colours defining four dots adjacent the dot horizontally and vertically are active. However, data for displaying a dot on the colour display causes data for printing the dot if all three primary colours defining the dot are active and at least one of the three primary colours defining four dots adjacent to the dot horizontally and vertically is not active. Also, data for displaying a dot on the colour display does not cause data for printing the dot if any of the three primary colours defining the dot is not active.

Referring now to Figure 12, data in tie buffer 23 for printed output is provided to the colour printer 9, through the serial-to-parallel converter 8. The printer 9 thus prints only the outline of a white area displayed by the colour display 4. Colour areas other than the white area are printed in the same colour as the colour areas on the Display 4. The background area on the Display 4 does not cause any printing on the printer.

In the embodiment of the present invention hereinbefore described, the converting means comprises the MPU 2, the control program 6, and the RAM 2. The various logical operations are performed by the MPU 2 and the control program 6 in combination. However, it will be appreciated that the logical operations may be performed by a dedicated logic circuit. Also, the embodiment hereinbefore described is arranged to process data corresponding to one row on the display at a time. However, it will be appreciated that other examples of the present invention may be arranged to process data corresponding to more than one row at a time.

Furthermore, in the embodiment of the present invention hereinbefore described, the outline of the white area on the display screen is printed because a printing medium is usually white or a colour approaching white. However, it will be appreciated that in other embodiments, if the printing medium is some other colour, the outline of a screen area of the same colour as the printing medium may be printed. It will be appreciated also that the outline may be printed not only in black but also in colours other than black.

It will now be appreciated that according to the present invention, there is now provided an information processing apparatus with capability of colour printing in such a manner that the impression of a colour image on the colour display screen does not significantly differ from one of the colour image on the printing medium.

**Claims**

1.   Information processing apparatus having a memory (11) for storing display data defining a separate combination of primary colours for each one of a plurality of pixels of a colour picture on a colour display (3);

characterised in that the apparatus further comprises:

conversion logic (2,6,7,8) for converting the display data into printing data for printing the picture on a colour printer (9), the conversion logic (2,6,7,8) being configured to detect any portion of the display data that corresponds to an area of the picture in which all the pixels are assigned to the same first colour, and to convert the portion of the display data into printing data for printing only an outline of the area on the printer (9) in colour.

2. Apparatus as claimed in claim 1 wherein the first colour comprises all three primary colours.

3. Apparatus as claimed in claim 2 wherein the conversion logic (2,6,7,8) comprises:

means for generating printing data for not printing a first pixel upon detecting display data corresponding to the first pixel to which all three primary colours have been assigned and also detecting display data corresponding to four pixels horizontally and vertically adjacent the first pixel to which all three primary colours have been assigned; and

means for generating printing data for printing the first pixel upon detecting display data corresponding to the first pixel to which all three primary colours have been assigned and also detecting display data corresponding to at least one of four pixels horizontally and vertically adjacent the first pixel to which not all three primary colours have been assigned.

4. A colour printer (9) comprising apparatus as claimed in any preceding claim.

5. A colour display (3) comprising apparatus as claimed in any claim preceding claim 4.

6. An information processing apparatus having means for outputting data for displaying a white area on a colour display screen as data for printing in colour only an outline of the data and for outputting data for displaying colour areas other than a white area as data for printing out the entire areas.

7. An information processing apparatus having a colour screen display, a colour printer, and converting means for converting data for displaying a white area on a colour display screen into data for printing in colour only an outline of the data.

8. An information processing apparatus according to claim (4) wherein said converting means do not cause data for printing a dot on the colour display screen in a case where any three primary colour data indicating the dot is not active.

9. An information processing apparatus having converting means for converting data for displaying the same colour area on the colour display screen as a colour area on a printing media into data for printing only an outline of the area in colour.

10. A method of translating display data for displaying a colour picture on a colour display into printing data for printing the colour picture on a colour printer, the method comprising:

storing the display data in a form defining a separate combination of primary colours for each one of a plurality of pixels of the picture in a memory;
identifying a portion of the display data that corresponds to an area of the picture in which all the pixels are assigned to the same first colour; and

converting said portion of the display data into printing data for printing on the printer (9) only the outline of the area in colour.

RAM 7

MPU
2

Control
Program
6

R
(1 screen)

G

B

11

White, row n-1
White, row n
White, row n+1

12

Both upper and lower, row n

13

Reversed, row n

14

W reversed, row n

15

Shift right, row n

16

Shift left, row n

17

Outline, row n

18

R        row n
B        row n
G        row n

19

R x Outline, row n
B x Outline, row n
G x Outline, row n

20

AND of RGB, row n
OR of RGB, row n
Reversed OR, row n
Reversed black and white, row n

21

R XOR Reversed black and white, row n
G XOR Reversed black and white, row n
B XOR Reversed black and white, row n

22

Printed output, row n

23

VRAM
1

CRTC

Color
CRT

3        4

8        9

S / P

Color
printer

FIG. 1

11

| R | R | R | R | R | – | – | row ( n – 1 ) |
|---|---|---|---|---|---|---|---|
| – | – | G | G | G | – | – | row ( n – 1 ) |
| – | – | B | B | B | B | B | row ( n – 1 ) |

| R | R | R | R | R | – | – | row  n |
|---|---|---|---|---|---|---|---|
| – | – | G | G | G | – | – | row  n |
| – | – | B | B | B | B | B | row  n |

| R | R | R | R | R | – | – | row ( n + 1 ) |
|---|---|---|---|---|---|---|---|
| – | – | G | G | G | – | – | row ( n + 1 ) |
| – | – | B | B | B | B | B | row ( n + 1 ) |

FIG. 2

12

| 0 | 0 | 1 | 1 | 1 | 0 | 0 | row ( n – 1 ) |
|---|---|---|---|---|---|---|---|
| 0 | 1 | 1 | 1 | 1 | 0 | 0 | row  n |
| 0 | 0 | 1 | 1 | 1 | 0 | 0 | row ( n + 1 ) |

FIG. 3

13

| 0 | 0 | 1 | 1 | 1 | 0 | 0 | Both upper and lower, and itself white, row n |
|---|---|---|---|---|---|---|---|
14

| 1 | 1 | 0 | 0 | 0 | 1 | 1 | Reversed,  row n |
|---|---|---|---|---|---|---|---|

FIG .4

15

| 1 | 0 | 0 | 0 | 0 | 1 | 1 | Reversed white,  row n |
|---|---|---|---|---|---|---|---|
16

| 0 | 1 | 0 | 0 | 0 | 0 | 1 | Shift right,  row n |
|---|---|---|---|---|---|---|---|
17

| 0 | 0 | 0 | 0 | 1 | 1 | 0 | Shift left,  row n |
|---|---|---|---|---|---|---|---|

FIG. 5

18

| 1 | 1 | 0 | 0 | 1 | 1 | 1 | White outline part and information other than white area,  row n |
|---|---|---|---|---|---|---|---|

FIG. 6

19

| R | R | R | R | R | – | – | R  row n |
|---|---|---|---|---|---|---|---|
| – | G | G | G | G | – | – | G  row n |
| – | B | – | – | B | B | B | B  row n |

FIG. 7

20

| R | R | – | – | R | – | – | Logical product to R,  row n |
|---|---|---|---|---|---|---|---|
| – | G | – | – | G | – | – | Logical product to G,  row n |
| – | B | – | – | B | B | B | Logical product to B,  row n |

FIG. 8

EP 0 481 621 A2

FIG. 9

21

| 0 | 1 | 0 | 0 | 1 | 0 | 0 | A N D information, row n

| 1 | 1 | 0 | 0 | 1 | 1 | 1 | O R information, row n

| 0 | 0 | 1 | 1 | 0 | 0 | 0 | Reversed O R information, row n

| 0 | 1 | 1 | 1 | 1 | 0 | 0 | Bit information for reversed black and white, row n

FIG 10

22

| R | — | R | R | — | — | — | X O R of reversed black and white information and R, row n
| — | — | G | G | — | — | — | X O R of reversed black and white information and B, row n
| — | — | B | B | — | B | B | X O R of reversed black and white information and G, row n

FIG. 11

23

| R Black White White Black B B | Printed outline data, row n

Green area

Yellow area

Outline

Yellow area

FIG. 12
Present invention

Background area

Green area   Yellow area

Yellow area

FIG 13
Image on color display screen

Green area   Yellow area

Black area

White area

White area   Yellow area

FIG. 14
Prior art

8